# FASCICULE DE BREVET EUROPEEN

(11) **EP 3 625 472 B1**
(45) Date de publication et mention de la délivrance du brevet: **20.01.2021**
(21) Numéro de dépôt: 18719979.9
(22) Date de dépôt: 16.04.2018
(51) Int. Cl.: F16D 21/06, F16D 48/06

(54) **PROCEDE DE CONTROLE D'UN GROUPE MOTOPROPULSEUR POUR LA REGULATION THERMIQUE D'UN CIRCUIT HYDRAULIQUE**
VERFAHREN ZUR STEUERUNG EINES ANTRIEBSSTRANGS ZUR THERMISCHEN REGELUNG EINES HYDRAULIKKREISES
METHOD FOR CONTROLLING A POWER TRAIN FOR THERMAL REGULATION OF A HYDRAULIC CIRCUIT

(30) Priorité: 15.05.2017 FR 1754229
(43) Date de publication de la demande: 25.03.2020
(73) Titulaire: PSA Automobiles SA, 78300 Poissy (FR)
(72) Inventeur: HABBANI, Ridouane, 92600 ASNIERES SUR SEINE (FR); SCHAEFFER, Eric, 75013 PARIS (FR)
(86) Numéro de dépôt international: PCT/FR2018/050948
(87) Numéro de publication internationale: WO 2018/211189

(56) Documents cités:
- WO-A1-2013/012483
- US-A1- 2012 173 103
- US-A1- 2016 041 066
- US-B1- 6 715 597

## Description

Le domaine de l'invention concerne un procédé de contrôle d'un groupe motopropulseur de véhicule automobile pour réguler la température du fluide d'actionnement d'un dispositif de couplage de la transmission, tel qu'un dispositif d'embrayage.

Conventionnellement, les véhicules automobiles à transmission pilotée, tel qu'un véhicule hybride, comportent un dispositif de couplage reliant un moteur thermique et une boite de vitesses et pouvant solidariser sélectivement en rotation l'arbre entrainant et l'arbre primaire de la boite de vitesses. Classiquement, la boite de vitesses et le dispositif de couplage sont pilotés hydrauliquement par un circuit hydraulique d'actionnement et un réseau de distributeurs alimentés par un fluide d'actionnement. Les distributeurs sont généralement des électrovannes pilotées en courant pour délivrer une pression/débit de fluide appliquant une force d'actionnement selon une position ou un couple transmissible recherché, comme cela est le cas pour un embrayage. De plus, dans le cas d'un dispositif de couplage de type embrayage humide à multidisques un circuit secondaire d'huile de lubrification est installé pour refroidir les disques de friction.

Comme cela est bien connu, lorsqu'un embrayage fonctionne dans un état de glissement, de l'énergie thermique est dissipée et est transmise à l'huile de lubrification. Selon l'état de la technique, il est connu d'exploiter ce phénomène pour adapter le pilotage du couple transmissible. Le document EP1320697B1 décrit un procédé de commande dans lequel on détermine par calcul la température de l'huile de lubrification au niveau des disques de friction pour adapter le couple transmissible de l'embrayage. Le document FR2933913B1 décrit également un pilotage du couple transmissible en fonction de la température de l'huile de lubrification. On connaît également le document FR2883609A1 dans lequel on adapte la consigne de couple transmissible pour réguler la température de l'huile de lubrification en dessous d'un seuil de température maximum.

On connait en outre le document de brevet US-B1-6715597 divulguant le préambule de la revendication 1.

Ces solutions traitent la problématique de la montée en température de l'huile de lubrification et de la variation du couple transmissible résultant de la montée en température de l'huile de lubrification. Il existe néanmoins un autre problème qui n'est pas abordé dans ses documents qui concerne la dispersion de réponse d'un circuit hydraulique d'actionnement. A basse température, on sait qu'un distributeur hydraulique présente une hystérésis de réponse détériorant la précision de pilotage. Il existe donc un besoin de traiter ce problème.

Plus précisément, l'invention concerne un procédé de contrôle d'un groupe motopropulseur d'un véhicule automobile pour réguler la température du fluide d'actionnement alimentant un distributeur hydraulique d'un circuit d'actionnement du groupe motopropulseur, le groupe motopropulseur comportant en outre un dispositif de couplage piloté par une consigne de couple transmissible, le dit dispositif de couplage étant relié à un circuit de lubrification alimenté par le fluide d'actionnement. Le procédé comporte une étape de détermination d'une température du fluide d'actionnement et le pilotage d'un état de glissement du dispositif de couplage de manière à modifier la température du fluide d'actionnement, et selon l'invention il comporte en outre la détermination d'un seuil de température prédéterminé du fluide d'actionnement et, lorsque la température du fluide d'actionnement est inférieure au seuil de température, le pilotage de l'état de glissement selon un couple de glissement pour amener la température du fluide d'actionnement au dessus du seuil de température.

Plus précisément, le seuil de température prédéterminé est configuré à une valeur pour laquelle une réponse du distributeur présente un niveau de dispersion minimum.

Selon une variante, la détermination de la température du fluide d'actionnement comporte une étape de mesure de température par un capteur de température du circuit d'actionnement.

Selon une variante, la valeur du couple de glissement est une valeur prédéterminée constante.

Selon une variante, le pilotage de l'état de glissement comporte une étape de pilotage d'au moins un moteur entrainant du groupe motopropulseur de manière que le couple transmissible du dispositif de couplage soit inférieur au couple moteur d'un premier moteur entrainant du groupe motopropulseur, le dit premier moteur entrainant étant relié en entrée du dispositif de couplage.

Selon une variante, il comporte en outre la détermination d'un couple moteur maximum pouvant être délivré par au moins le dit premier moteur entrainant, et si le couple moteur maximum est supérieur au couple moteur délivré par au moins le dit premier moteur entrainant, le pilotage de l'état de glissement est autorisé.

Plus précisément, le pilotage de l'état de glissement est piloté selon un premier mode dans lequel le premier moteur entrainant introduit le couple de glissement de manière que le couple transmissible du dispositif de couplage soit inférieur au couple moteur dudit premier moteur entrainant.

Dans un mode de réalisation pour un véhicule hybride, le groupe motopropulseur comporte en outre un deuxième moteur entrainant apte à transmettre un couple moteur aux roues, et le procédé comporte en outre une étape d'arbitrage du pilotage de l'état de glissement entre le premier mode et un deuxième mode, et lorsque le pilotage de l'état de glissement est piloté selon le deuxième mode, le procédé comporte en outre la diminution du couple transmissible du dispositif de couplage selon le couple de glissement de manière que le couple transmissible du dispositif de couplage soit inférieur au couple moteur dudit premier moteur entrainant, et l'introduction du couple moteur par le deuxième moteur entrainant pour compenser la perte de couple résultant du glissement.

Plus précisément, l'étape d'arbitrage comporte la comparaison du couple moteur dudit premier moteur entrainant et d'un couple maximum pouvant être délivré par le premier moteur entrainant, et lorsque le couple moteur est égal au couple maximum, l'état de glissement est piloté selon le deuxième mode.

Il est prévu selon l'invention, un véhicule automobile comportant un groupe motopropulseur piloté par un dispositif de contrôle, et dans lequel le dispositif de contrôle exécute le procédé selon l'un quelconque des modes de réalisation précédent.

Grâce à l'invention, les effets d'une dissipation thermique provoquée par un état de glissement d'un dispositif de couplage sont mis à profit pour chauffer le fluide d'actionnement d'un distributeur hydraulique d'un circuit d'actionnement relié au circuit de lubrification. On améliore ainsi la précision de contrôle des distributeurs hydrauliques et la précision du pilotage d'un dispositif actionné hydrauliquement.

D'autres caractéristiques et avantages de la présente invention apparaîtront plus clairement à la lecture de la description détaillée qui suit comprenant des modes de réalisation de l'invention donnés à titre d'exemples nullement limitatifs et illustrés par les dessins annexés, dans lesquels :
- la figure 1 représente un groupe motopropulseur de véhicule automobile dans lequel est mis en œuvre le procédé de contrôle selon l'invention ;
- la figure 2 représente un schéma de principe du dispositif de couplage, son circuit d'actionnement hydraulique et son circuit de lubrification;
- la figure 3 représente une partie des modules de pilotage du dispositif de contrôle du groupe motopropulseur intervenant dans la mise en œuvre de l'invention ;
- la figure 4 représente un graphique illustrant les dispersions de fonctionnement du distributeur hydraulique en fonction de la température du fluide d'actionnement ;
- la figure 5 représente une séquence du procédé de contrôle selon l'invention ;
- la figure 6 représente les valeurs des consignes de pilotage du groupe motopropulseur durant l'exécution du procédé selon l'invention lors d'un premier mode de pilotage ;
- la figure 7 représente les valeurs des consignes de pilotage du groupe motopropulseur durant l'exécution du procédé selon l'invention lors d'un deuxième mode de pilotage.

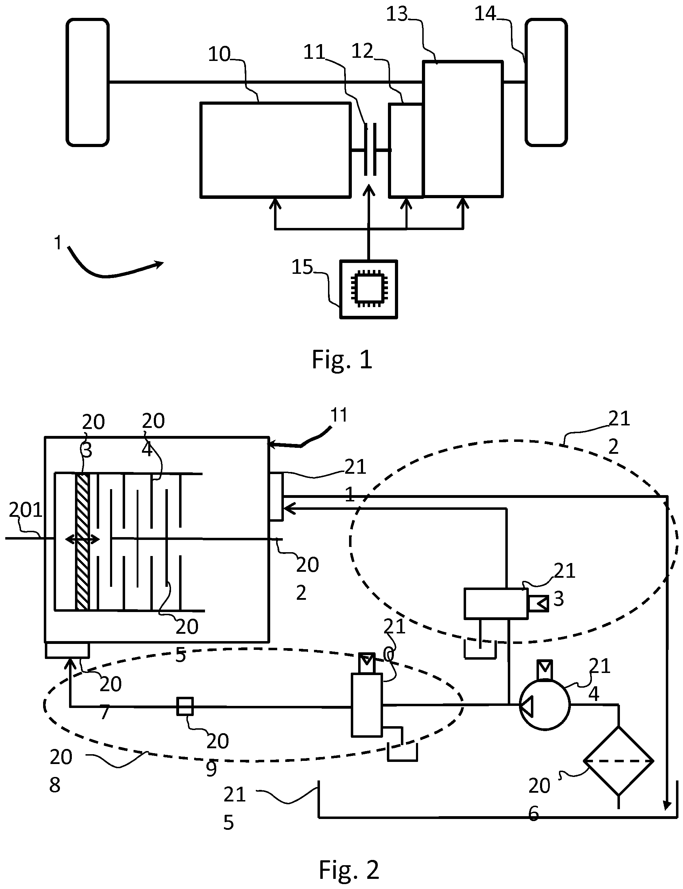

L'invention s'applique aux véhicules automobiles dans lesquels, comme cela est représenté en figure 1, le groupe motopropulseur 1 comporte au moins un moteur entrainant 10, une boite de vitesses 13, un dispositif de couplage piloté 11 et un dispositif de contrôle 15 pour les coordonner. Sur la figure 1, le groupe motopropulseur 1 est hybride et est en outre équipé d'un deuxième moteur entrainant 12 qui est une machine électrique de traction montée entre le dispositif de couplage 11 et la boite de vitesses 13 permettant ainsi un mode de roulage tout électrique ou hybride en assistance du moteur entrainant 10. Le moteur entrainant 10 est un moteur thermique à combustion interne comprenant un arbre d'entrainement lié solidaire en rotation en entrée du dispositif de couplage. La boite de vitesses pilotée 13 comporte un arbre primaire lié solidaire en rotation en sortie du dispositif de couplage et peut être configurée pour appliquer un ou plusieurs rapports de démultiplication entre le moteur thermique et les roues 14 du véhicule. L'arbre secondaire en sortie de la boite de vitesses 13 est lié en transmission aux roues 24 du véhicule.

Dans une variante, la machine électrique de traction est montée sur un train de roues distinct de celui sur lequel est attelé le moteur thermique. On envisage également d'appliquer le procédé de contrôle pour groupe motopropulseur possédant une traction thermique uniquement. Dans ce cas, le groupe motopropulseur n'est pas équipé de la machine électrique de traction 12.

Le dispositif de couplage 11 est apte à solidariser sélectivement en rotation l'arbre d'entrainement et l'arbre primaire en fonction d'une commande de couple transmissible pour transmettre un couple moteur aux roues généré par le moteur thermique 10. Par exemple, le dispositif de couplage 11 est un dispositif d'embrayage humide à disques, lequel est actionné par des moyens d'actionnement hydraulique.

Le dispositif de couplage 11 est pilotable dans un état de verrouillage, un état d'ouverture et un état de glissement, ce dernier état est utilisé par l'invention pour augmenter la température du fluide de lubrification. L'état de glissement correspond à un état pour lequel les disques en charge de transmettre le couple moteur sont en friction les uns avec les autres. Lors d'un glissement, seule une partie du couple moteur est transmissible. Le pilotage de l'état de glissement consiste à commander un couple transmissible qui est inférieur au couple moteur en entrée du dispositif de couplage 11.

En figure 2, on a représenté plus précisément un schéma de principe du dispositif d'embrayage humide à disques 11 et les moyens d'actionnement hydraulique. Le dispositif d'embrayage 11 est relié en entrée à l'arbre d'entrainement 201 du moteur thermique 10 et à l'arbre primaire 202 de la boite de vitesses. Le dispositif d'embrayage comporte, disposés alternativement les uns par rapport aux autres, des disques 204 et 205 solidaires respectivement de l'arbre d'entrainement 201 et de l'arbre primaire 202. Un piston hydraulique 203 est mobile en translation et est actionnable par les moyens d'actionnement de manière à solidariser et désolidariser en rotation les disques 204, 205 en fonction de la commande de couplage.

Les moyens d'actionnement comportent une interface d'actionnement 207 amenant un fluide d'actionnement, tel que de l'huile, piloté en pression ou débit dans une chambre d'actionnement du dispositif d'embrayage 11 en contact avec le piston 203, un circuit d'actionnement hydraulique 208 dans lequel circule le fluide d'actionnement, un distributeur hydraulique 210 piloté en courant en fonction de la commande de couplage, et un capteur de mesure de la température 209 du fluide d'actionnement. Le distributeur hydraulique 210 est alimenté par une pompe hydraulique 214 et sa fonction est de réguler la pression ou le débit de sortie dans le circuit d'actionnement 208.

Par ailleurs, la pompe hydraulique 214 alimente également via une dérivation un circuit de lubrification 212 du dispositif d'embrayage 11. Le circuit de lubrification comporte une interface de lubrification 211 pour amener le fluide d'actionnement dans la zone de friction des disques 204, 205. Le débit de lubrification est piloté par un distributeur hydraulique 213 piloté en courant en fonction d'une commande de lubrification. Le distributeur hydraulique 213 est alimenté par la pompe hydraulique 214 et il est prévu un circuit de retour de fluide direct vers un réservoir 215, couramment appelé bâche. Toutefois, il est également envisageable que le circuit de retour de fluide puisse être dérivé vers un dispositif de refroidissement du fluide avant de revenir au réservoir 215. La pompe hydraulique 214 puise le fluide d'actionnement dans le réservoir via un filtre 206, couramment appelé crépine. Les distributeurs hydrauliques 210, 213 sont de type électrovanne à commande de courant et sont pilotés par le dispositif de contrôle 15. Les fonctions de pilotage seront décrites plus précisément dans la suite de la description.

De préférence, afin d'améliorer le contrôle et la précision du circuit d'actionnement de l'embrayage 11, il est envisagé de réduire au plus court la longueur des circuits d'actionnement 208 et de lubrification 212. A cet effet, la pompe hydraulique 214 alimente exclusivement les circuits d'actionnement 208 et de lubrification 212. Ainsi, lors de la régulation de température du fluide d'actionnement au moyen du dispositif d'embrayage 11 par un état de glissement, les pertes thermiques du fluide d'actionnement sont réduites lorsqu'il circule jusqu'au réservoir.

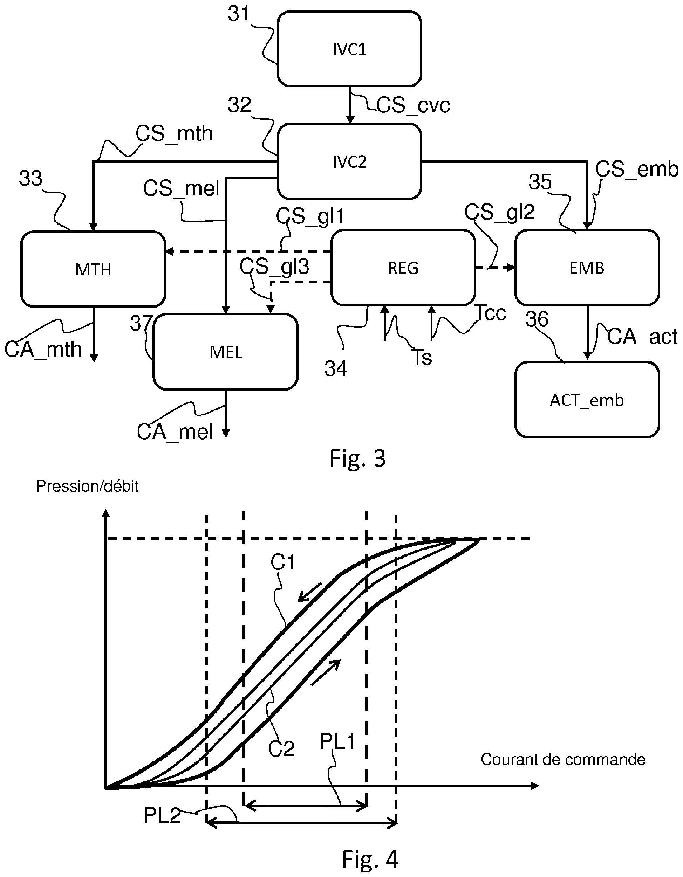

En figure 3, on a représenté les modules de pilotage opérés par le dispositif de contrôle 15 du groupe motopropulseur 1 intervenant pour l'exécution du procédé de contrôle selon l'invention. Conventionnellement, le dispositif de contrôle 15 comporte un ou plusieurs calculateurs à circuits intégrés couplés à des mémoires et destinés à exécuter des fonctions de pilotage pour le fonctionnement du groupe motopropulseur. En particulier, les mémoires enregistrent une fonction de pilotage contenant les instructions d'exécution du procédé de contrôle selon l'invention.

Un premier module d'interface 31 calcule une consigne de couple de la volonté du conducteur CS_cvc à partir de l'interface de pilotage de l'habitacle en fonction de paramètres d'accélération ou de freinage provenant des dispositifs de commande de la vitesse du véhicule, tels qu'une mesure de la position d'une pédale d'accélération ou d'une pédale de freinage par un capteur proportionnel, ou bien de la vitesse d'enfoncement ou de l'accélération d'enfoncement des pédales. Un deuxième module de répartition 32 calcule des consignes de couple à répartir entre les actionneurs en couple du groupe motopropulseur, notamment une consigne de couple moteur CS_mth à destination d'un module de pilotage 33 du moteur thermique 10, une consigne de couple transmissible CS_emb à destination d'un module de pilotage 35 du dispositif d'embrayage 11 et une consigne de couple moteur électrique CS_mel à destination d'un module de pilotage 37 de la machine électrique de traction 12. Le module de pilotage 33 du moteur thermique émet une commande de couple moteur CA_mth à destination du moteur 10. Le module de pilotage 35 émet des commandes de couplage CA_act à destination d'un module de pilotage 36 pilotant le distributeur hydraulique 210 et le distributeur hydraulique 213. Le module de pilotage 36 contrôle les distributeurs 210, 213 en fonction des commandes de couplage CA_act pour piloter par un courant de commande un débit ou une pression du fluide d'actionnement dans le circuit d'actionnement 208 et le circuit de lubrification 212. Dans le cas du pilotage du distributeur 210, la pression pilotée correspond à un couple transmissible recherché et opéré par le dispositif d'embrayage 11. Dans le cas du pilotage du distributeur 213, la pression pilotée correspond à un débit de lubrification. Enfin, le module de pilotage 37 de la machine électrique de traction 12 reçoit une consigne de couple moteur électrique CS_mel issue du module de répartition 32 et élabore une commande de couple moteur électrique CA_mel de la machine électrique de traction, notamment pour transmettre un couple aux roues ou générer un couple de freinage.

Par ailleurs, à la base de l'invention, pour améliorer la précision du pilotage du distributeur 210, le dispositif de contrôle 15 comporte un module de régulation thermique 34 du fluide d'actionnement qui est en charge de piloter l'état de glissement du dispositif d'embrayage 11 afin d'augmenter la température du fluide d'actionnement Tcc lorsque cette dernière est inférieure à un seuil de température prédéterminé Ts. Le module de régulation thermique 34 est apte à déterminer d'une part, la température Tcc du fluide d'actionnement dans le circuit d'actionnement 208, notamment à partir du capteur 209, et d'autre part le seuil de température prédéterminé Ts du fluide d'actionnement.

Dans une variante, à partir de méthodes bien connues de l'homme du métier, la température du fluide d'actionnement Tcc est déterminée à partir d'une estimation de la température calculée par des moyens logiciels se basant sur les caractéristiques instantanées de transmission du dispositif d'embrayage 11, par exemple selon les enseignement du document brevet FR2883609A1 précité dans l'état de la technique.

De plus, le module de régulation thermique 34 calcule des consignes de glissement CS_gl1, CS_gl2, CS_gl3 à destination respectivement du module de pilotage 33 du moteur thermique 10, du module de pilotage 35 du dispositif d'embrayage 11 et du module de pilotage 37 de la machine électrique de traction 12. Les consignes de glissement CS_gl1, CS_gl2, introduisent un couple de glissement CP_gl et la consigne CS_gl3 un couple de compensation du glissement pouvant être de même valeur que le couple de glissement CP_gl. Le couple de glissement CP_gl est configuré pour que la commande de couple transmissible CA_act du dispositif d'embrayage 11 devienne inférieure à la commande de couple moteur CA_mth à son entrée. Les disques 204, 205 entrent alors en état de friction.

La consigne CS_gl1 commande un couple de glissement pouvant être introduit par le moteur thermique 10 pour amener le dispositif d'embrayage 11 dans un état de glissement. Ce couple de glissement est ajouté en complément de la consigne de couple moteur CS_mth calculée par le module de répartition 32. La consigne CS_gl2 comporte au moins une consigne de pilotage du débit de circulation du fluide d'actionnement du circuit de lubrification 212 de manière à permettre le retour du fluide d'actionnement, qui a été amené à la température voulue lors de l'état de glissement, vers le réservoir 215 afin que celui-ci soit ensuite amené vers le circuit d'actionnement 208 pour améliorer la précision de réponse du distributeur 210.

Par ailleurs, il est envisagé que la consigne CS_gl2 comporte en outre une consigne d'actionnement du circuit d'actionnement 208 du dispositif d'embrayage 11 afin de piloter un état de glissement lorsque le glissement n'est pas provoqué par un changement de la consigne de couple moteur CS_mth. Dans cette situation, la consigne CS_gl3 commande un couple de compensation pouvant être introduit par la machine électrique de traction 12 pour compenser la perte de couple lié au glissement. On décrira cette variante du procédé dans la suite de la description.

Le seuil de température prédéterminé Ts dépend du type et du dimensionnement du distributeur 210. Il est choisi par exemple à une valeur de température d'environ 20°c. Plus généralement, il est configuré à une valeur pour laquelle une réponse du distributeur 210 à la consigne de couple transmissible CS_emb présente un niveau de dispersion minimum, cette valeur étant indiquée par les données fournies par le constructeur du distributeur 210. Il est connu que la dispersion de fonctionnement d'une électrovanne est imputable à la viscosité du fluide d'actionnement ainsi qu'aux caractéristiques de dilation de ses composants. Le courant de commande provoque un déplacement du noyau de l'électrovanne qui créé une ouverture plus ou moins importante du circuit. Cette ouverture présente une section d'ouverture qui peut introduire des pertes de charges sensibles à la température du fluide d'actionnement.

La figure 4 illustre cet effet de dispersion. Deux hystérésis de dispersion de la réponse du distributeur 210 sont représentées en fonction de la température du fluide d'actionnement qui l'alimente. En abscisse est représenté le courant de commande de distributeur 210 et en ordonné la réponse en pression ou débit. La courbe de réponse C1 correspond à une température du fluide d'actionnement inférieure à celle de la courbe C2. Comme on le voit, la plage de fonctionnement linéaire PL1 de la courbe C1 est inférieure à la plaque de fonctionnement linéaire PL2 de la courbe C2. L'élargissement de la plage de fonctionnement linéaire et des seuils de déclenchement de pilotage du distributeur améliore la précision de pilotage. L'invention permet d'amener la température du fluide du circuit d'actionnement à une température pour laquelle la courbe de dispersion en réponse présente l'hystérésis la plus faible.

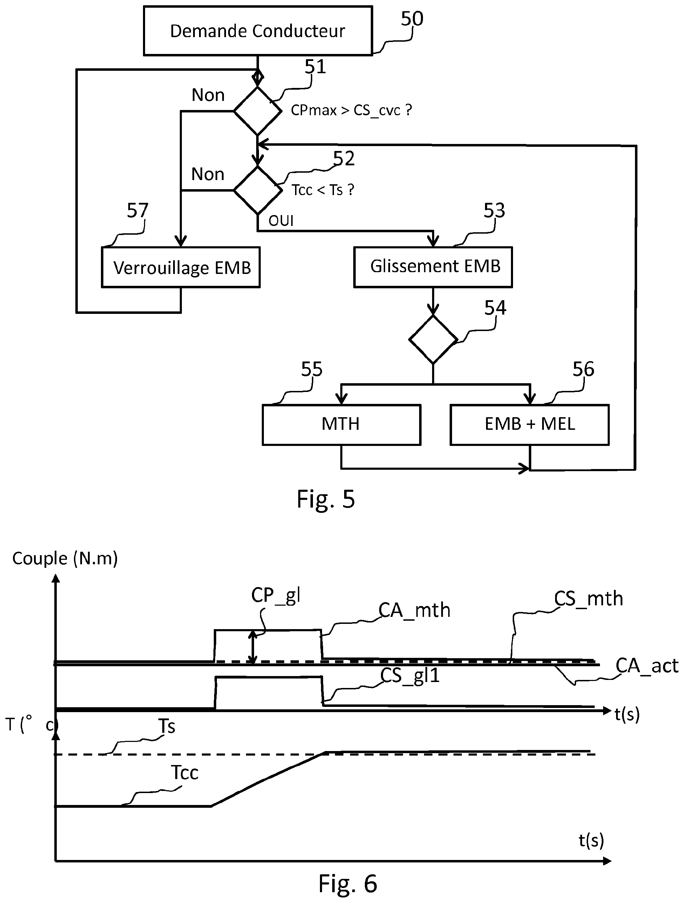

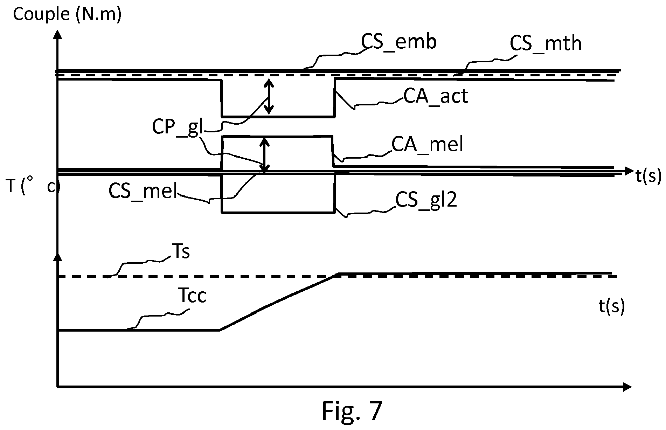

La figure 5 représente le procédé de contrôle selon l'invention pour améliorer la précision de pilotage du circuit d'actionnement, et les figures 6 et 7 représentent les valeurs des consignes de pilotage du groupe motopropulseur lors de l'exécution du procédé selon l'invention. A une première étape 50, le véhicule est en roulage dans une situation pour laquelle un couple moteur est demandé par le conducteur. Le procédé de contrôle du groupe motopropulseur pilote donc à cette étape, une consigne de couple CS_cvc calculée à partir de la volonté du conducteur, une consigne de couple moteur CS_mth et une consigne de couple moteur électrique CS_mel, toutes deux en réponse à la consigne CS_cvc, et une consigne de couple transmissible CS_emb par le dispositif d'embrayage 11 pour permettre la transmission du couple moteur CS_mth vers les roues du véhicules.

A une étape 51, le procédé comporte une étape de vérification de la capacité du moteur thermique 10 et de la machine électrique de traction 12 à fournir un couple additionnel à la consigne de couple moteur CS_mth et à la consigne de couple moteur CS_mel respectivement. Ceci afin d'introduire un état de glissement de l'embrayage ou de compenser l'état de glissement. A cet effet, le procédé comporte en outre la détermination d'un couple moteur maximum CPmax pouvant être délivré par le moteur thermique 10 et la machine électrique de traction 12, et si le couple moteur maximum CPmax est supérieur au couple moteur instantané CS_cvc qui est délivré à la fois par le moteur thermique 10 et par la machine électrique de traction 12, l'augmentation de la consigne de couple moteur CS_mth par la consigne CS_gl1 est autorisée, ou l'augmentation de la consigne moteur CS_mel par la consigne CS_gl3 est autorisée, selon lequel des deux moteurs est en capacité d'augmenter sa charge. Le procédé de contrôle est ensuite amené alors à l'étape 52.

Dans la situation pour laquelle le groupe motopropulseur 1 n'est pas en capacité d'augmenter sa charge moteur alors le procédé est amené à l'étape 57 qui consiste à maintenir le dispositif d'embrayage dans un état de verrouillage ou du moins dans un état sans glissement pour éviter de détériorer l'agrément de conduite.

A l'étape 52, le procédé vérifie ensuite la température du fluide d'actionnement. A cet effet, pour déterminer la température du fluide d'actionnement Tcc le procédé comporte une étape de mesure de température par le capteur 209 positionné dans le circuit d'actionnement 208. On améliore ainsi la précision de la mesure de température. Toutefois, dans une variante la température est déterminée par calcul selon une méthode décrite précédemment.

Ensuite, à une étape 53, lorsque la température du fluide d'actionnement Tcc est inférieure au seuil de température Ts, le procédé comporte une étape de pilotage de l'état de glissement selon le couple de glissement CP_gl pour amener la température du fluide d'actionnement au dessus du seuil de température. Plus précisément, une consigne de couple moteur d'au moins un des deux moteurs entrainants du groupe motopropulseur 1, soit du moteur thermique 10, soit de la machine électrique de traction 12, est augmentée de la valeur du couple de glissement. Cette situation est maintenue tant que la température Tcc est inférieure au seuil Ts. La valeur du couple de glissement CP_gl pilotée par le procédé est une valeur prédéterminée constante. Néanmoins, il est envisageable que le couple de glissement soit une valeur variable, par exemple en fonction de l'écart de température entre la température du fluide d'actionnement Tcc et le seuil de température Ts.

A cet effet, il est prévu une étape d'arbitrage 54 entre les deux modes possibles pour le pilotage de l'état de glissement, ces modes étant représentés par les étapes 55, 56 sur les figures 6, 7 respectivement. L'arbitrage s'exécute en fonction d'un critère de priorité, privilégiant l'un des deux moteurs entrainants, et en fonction de la capacité de chacun des moteurs entrainants 10,12 du groupe motopropulseur 1 pour fournir un couple moteur supplémentaire correspondant au couple de glissement.

Lors de l'étape d'arbitrage 54, le procédé comporte la comparaison de la commande du couple moteur CA_mth et d'un couple maximum Cmax10 pouvant être délivré par le moteur thermique 10, et lorsque la commande du couple moteur CA_mth est égale au couple maximum Cmax10, l'état de glissement est piloté selon le deuxième mode 56, sinon selon le premier mode. La fonction d'arbitrage est exécutée par le module de pilotage 34 de la régulation thermique.

Dans une variante, il est prévu que le procédé exécute seulement l'un des deux modes de pilotage de l'état de glissement.

Selon le premier mode, illustré par la figure 6, l'état de glissement est provoqué par la montée en couple du moteur thermique 10. A l'étape 54, la fonction d'arbitrage a détecté que le moteur thermique 10 a une capacité maximale Cmax10 qui est supérieure au couple moteur instantané CA_mth.

Donc, à une étape 55, le procédé de contrôle pilote le groupe motopropulseur de manière que la commande de couple transmissible CA_act ait une valeur inférieure à la commande de couple moteur CA_mth. Ici, la consigne CS_mth est augmentée de la valeur du couple de glissement CP_gl, et la commande CA_act du dispositif d'embrayage 11 est égale à la valeur de la consigne CS_emb. On notera que la consigne CS_emb est constante et est de même valeur que la consigne CS_mth représentée en trait en pointillé. Ainsi, la commande du moteur thermique résultante CA_mth est égale à : CA_mth = CS_mth + CP_gl, CP_gl étant introduit par la consigne CS_gl1. Le couple de glissement supplémentaire CP_gl est donc dissipé par les disques 204, 205 du dispositif d'embrayage 11 et provoque une montée en température du fluide d'actionnement. Le circuit de lubrification 212 est piloté en circulation de fluide pour amener le fluide chauffé au réservoir 215.

Comme on le voit en figure 6, initialement, la température du fluide d'actionnement Tcc est inférieure au seuil Ts, et le dispositif d'embrayage est en état de verrouillage. Lorsque l'état de glissement est piloté, la consigne CS_mth est augmentée du couple de glissement CP_gl tant que la température Tcc du fluide d'actionnement est inférieure au seuil Ts. On notera que dans cette situation, le couple moteur total CS_cvc à transmettre aux roues en réponse à la volonté du conducteur est uniquement généré par le moteur thermique 10, la consigne CS_mel est nulle tout du long de cette situation.

Selon le deuxième mode, illustré par la figure 7, l'état de glissement est provoqué par une diminution de la commande de couple transmissible CA_act du dispositif d'embrayage 11. A l'étape 54, la fonction d'arbitrage a détecté que le moteur thermique 10 fonctionne à sa capacité maximale Cmax10 et l'état de glissement est alors piloté par une modification du couple transmissible du dispositif d'embrayage 11.

Ensuite, à l'étape 56, le procédé de contrôle pilote le groupe motopropulseur de manière que la commande de couple transmissible CA_act ait une valeur inférieure à la première commande de couple moteur CA_mth qui est égale à la consigne CS_mth représentée en trait en pointillé. Ici, la consigne de couple transmissible CS_emb (qui est égale à la valeur de la consigne CS_mth) est diminuée du couple de glissement CP_gl selon la consigne CS_gl2, et la consigne de couple moteur électrique CS_mel est augmentée de la valeur du couple de glissement CP_gl selon la consigne CS_gl3 de manière à compenser la perte de couple résultant du glissement.

Donc, comme on le voit en figure 7, la commande de couple transmissible du dispositif d'embrayage 11 est égale à : CA_act = CS_emb - CP_gl, et la commande de la machine électrique est égale à : CA_mel= CS_mel + CP_gl. La diminution du couple transmissible CA_act provoque un état de dissipation thermique au niveau des disques. Il en résulte une montée en température du fluide d'actionnement. Identiquement à l'étape 55, le circuit de lubrification 212 est piloté en circulation de fluide pour amener le fluide chauffé au réservoir 215 et l'état de glissement est piloté tant que la température Tcc du fluide d'actionnement est inférieure au seuil Ts.

Dans les figures 6 et 7, on a décrit une situation particulière de valeurs de consigne de couple. D'autres situations qui entrainent un état de glissement sont possibles sans sortir du cadre de l'invention. Par exemple, le couple de glissement CP_gl peut avoir une valeur en couple différente du couple de compensation de la machine électrique. En effet, il est courant que l'état de verrouillage du dispositif d'embrayage soit piloté par une commande de couple transmissible supérieure au couple moteur à transmettre selon un écart de couple prédéterminé pour garantir le verrouillage. Il en résulte donc une valeur de couple de glissement devant prendre en compte cet écart de couple.

On a décrit précédemment un mode de réalisation pour lequel le circuit d'actionnement 208 pilote le dispositif d'embrayage 11. Dans d'autres modes de réalisation, la pompe hydraulique 214 alimente un autre circuit d'actionnement pilotant par exemple un deuxième dispositif d'embrayage. Ainsi, cet autre circuit d'actionnement est alimenté par le fluide d'actionnement utilisé pour la lubrification du premier dispositif d'embrayage et bénéficie également de la régulation thermique du fluide d'actionnement mise en œuvre par l'invention.

Le procédé s'applique également pour un véhicule à traction thermique uniquement. Dans ce cas, l'état de glissement est piloté par le moteur thermique en pilotant un couple moteur supérieur au couple transmissible par le dispositif d'embrayage, et l'étape d'arbitrage 54 du procédé n'est alors pas nécessaire. Dans une variante, le procédé s'applique pour un module de traction électrique dans lequel le moteur entrainant en entrée du dispositif de couplage est une machine électrique de traction. Par ailleurs, le dispositif de couplage peut être par exemple un dispositif d'embrayage multidisques, un dispositif d'embrayage à deux plateaux de friction ou un dispositif de crabotage humide.

## Revendications

1. Procédé de contrôle d'un groupe motopropulseur (1) d'un véhicule automobile pour réguler la température du fluide d'actionnement alimentant un distributeur hydraulique (210) d'un circuit d'actionnement (208) du groupe motopropulseur, le groupe motopropulseur comportant en outre un dispositif de couplage (11) piloté par une consigne de couple transmissible (CS_emb), le dit dispositif de couplage (11) étant relié à un circuit de lubrification (212) alimenté par le fluide d'actionnement, le dit procédé comportant une étape de détermination (52) d'une température (Tcc) du fluide d'actionnement et le pilotage d'un état de glissement (53) du dispositif de couplage (11) de manière à modifier la température du fluide d'actionnement, **caractérisé en ce qu'**il comporte en outre la détermination d'un seuil de température prédéterminé (Ts) du fluide d'actionnement et, lorsque la température du fluide d'actionnement (Tcc) est inférieure au seuil de température (Ts), le pilotage de l'état de glissement (53) selon un couple de glissement (CP_gl) pour amener la température du fluide d'actionnement au dessus du seuil de température (Ts).

2. Procédé selon la revendication 1, **caractérisé en ce que** le seuil de température prédéterminé (Ts) est configuré à une valeur pour laquelle une réponse du distributeur (210) présente un niveau de dispersion minimum.

3. Procédé selon la revendication 1 ou 2, **caractérisé en ce que** la détermination de la température (52) du fluide d'actionnement comporte une étape de mesure de température par un capteur de température (209) du circuit d'actionnement (208).

4. Procédé selon l'une quelconque des revendications 1 à 3, **caractérisé en ce que** la valeur du couple de glissement (CP_gl) est une valeur prédéterminée constante.

5. Procédé selon l'une quelconque des revendications 1 à 4, **caractérisé en ce que** le pilotage de l'état de glissement (53) comporte une étape de pilotage (55 ; 56) de manière que le couple transmissible (CA_act) du dispositif de couplage (11) soit inférieur au couple moteur (CA_mth) d'un premier moteur entrainant (10) du groupe motopropulseur, le dit premier moteur entrainant (10) étant relié en entrée du dispositif de couplage (11).

6. Procédé selon la revendication 5, **caractérisé en ce qu'**il comporte en outre la détermination d'un couple moteur maximum (CPmax) pouvant être délivré par au moins le dit premier moteur entrainant (10), et si le couple moteur maximum (CPmax) est supérieur au couple moteur délivré par au moins le dit premier moteur entrainant (10), le pilotage de l'état de glissement (53) est autorisé.

7. Procédé selon l'une quelconque des revendications 5 à 6, **caractérisé en ce que** le pilotage de l'état de glissement (53) est piloté selon un premier mode (55) dans lequel le premier moteur entrainant (10) introduit le couple de glissement (CP_gl) de manière que le couple transmissible (CA_act) du dispositif de couplage (11) soit inférieur au couple moteur (CA_mth) dudit premier moteur entrainant (10).

8. Procédé selon la revendication 7, le groupe motopropulseur comportant en outre un deuxième moteur entrainant (12) apte à transmettre un couple moteur (CA_mel) aux roues, **caractérisé en ce qu'**il comporte en outre une étape d'arbitrage (54) du pilotage de l'état de glissement (53) entre le premier mode (55) et un deuxième mode (56), et lorsque le pilotage de l'état de glissement (53) est piloté selon le deuxième mode (56), le procédé comporte en outre la diminution du couple transmissible du dispositif de couplage (11) selon le couple de glissement (CP_gl) de manière que le couple transmissible (CA_act) du dispositif de couplage (11) soit inférieur au couple moteur (CA_mth) dudit premier moteur entrainant (10), et l'introduction du couple moteur (CA_mel) par le deuxième moteur entrainant (12) pour compenser la perte de couple résultant du glissement.

9. Procédé selon la revendication 8, **caractérisé en ce que** l'étape d'arbitrage (54) comporte la comparaison du couple moteur (CA_mth) dudit premier moteur entrainant (10) et d'un couple maximum (Cmax10) pouvant être délivré par le premier moteur entrainant (10), et lorsque le couple moteur (CA_mth) est égal au couple maximum (Cmax10), l'état de glissement est piloté selon le deuxième mode (56).

10. Véhicule automobile comportant un groupe motopropulseur (1) piloté par un dispositif de contrôle, **caractérisé en ce que** le dispositif de contrôle exécute le procédé selon l'une quelconque des revendications 1 à 9.

## Patentansprüche

1. Verfahren zum Steuern eines Antriebsstrangs (1) eines Kraftfahrzeugs zum Regulieren der Temperatur des Betätigungsfluids, das einen Hydraulikverteiler (210) eines Betätigungskreises (208) des Antriebsstrangs versorgt, wobei der Antriebsstrang umfasst ferner eine Kupplungsvorrichtung (11), die durch einen übertragbaren Drehmomentsollwert (CS_emb) gesteuert wird, wobei die Kupplungsvorrichtung (11) mit einer Schmierschaltung (212) verbunden ist angetrieben durch das Betätigungsfluid, wobei das Verfahren einen Schritt umfasst, die Bestimmung (52) von temperatur (Tcc) des Betätigungsfluids und einen Schlupfzustand zu steuern (53) der Kupplungsvorrichtung (11), um die Temperatur des Betätigungsfluids zu modifizieren, **gekennzeichnet dadurch, dass** ferner das Bestimmen einer vorbestimmten Temperaturschwelle (Ts) des Betätigungsfluids und , wenn die Temperatur des Betätigungsfluids (Tcc) liegt unterhalb der Temperaturschwelle (Ts), der Kontrolle von e der Gleitzustand (53) gemäß einem Gleitdrehmoment (CP_gl) zu bringen, um die Temperatur des Betätigungsströmungsmittels über der Temperaturschwelle (Ts).

2. Verfahren nach Anspruch 1, **dadurch gekennzeichnet, dass** die vorbestimmte temperaturschwelle (Ts) auf einen Wert eingestellt ist, für den eine Verteilerantwort (210) ein Mindestdispersionsniveau aufweist.

3. Verfahren nach Anspruch 1 oder 2, **dadurch gekennzeichnet, daß** die Bestimmung der Temperatur (52) des Betätigungsströmungsmittels einen Schritt umfasst, die Temperatur durch ein Messtemperatursensor (209) von der Betätigungsschaltung (208).

4. Verfahren nach einem der Ansprüche 1 bis 3, **dadurch gekennzeichnet, dass** der Wert des Gleitdrehmoment (CP_gl) ein konstanter vorbestimmter Wert ist.

5. Verfahren nach einem der Ansprüche 1 bis 4, **dadurch gekennzeichnet, dass** die Steuerung des Schlupfzustands (53) einen Steuerschritt (55 ; 56) umfasst, so dass das übertragbare Drehmoment (CA_act) der Vorrichtung Die Kupplung (11) ist kleiner als der Drehmomentmotor (CA_mth) eines ersten Motors, der das Triebwerk der Gruppe antreibt (10), wobei der erste Motor, der das (10) antreibt, am Eingang der Kupplungsvorrichtung (11) angeschlossen ist.

6. Verfahren nach Anspruch 5, **dadurch gekennzeichnet, dass** es ferner die Bestimmung eines maximales Motordrehmoments (CPmax) durch ausgegeben
werden mindestens die genannte erster Motor führende (10) und, wenn das maximalen Motordrehmoment (CPmax) das Motordrehmoment größer ist als durch geliefert zumindest die die ersten Antriebsmotor (10), die Steuerung des Schlupfzustandes (53) erlaubt ist.

7. Verfahren nach einem der Ansprüche 5 bis 6, **dadurch gekennzeichnet, dass** die Steuerung des Gleitzustands (53) gemäß einem ersten Modus (55) gesteuert wird, in dem der
erste Antriebsmotor (10) das Gleitmoment einführt (CP_gl), so dass das übertragbare Drehmoment (CA_act) der Kupplungsvorrichtung (11) geringer ist als das Motordrehmoment (CA_mth) des ersten Antriebsmotors (10).

8. Verfahren nach Anspruch 7, Antriebsstrang comport ant ferner ein zweiter Antriebsmotor (12) geeignet ist, ein Motordrehmoment zu übertragen (CA_mel) an die Rädern, **dadurch gekennzeichnet, dass** es ferner einen Schritt des Schiedsverfahrens (54) Steuerung des Schlupfzustands (53) zwischen dem ersten Modus (55) und einem zweiten Modus (56), und wenn die Steuerung des Schlupfzustands (53) gemäß dem zweiten Modus (56) gesteuert wird, das Verfahren ferner die Verringerung des übertragbaren Drehmoments der Kupplungsvorrichtung (11) nach dem Gleitdrehmoment (CP_gl) aus, so dass das übertragbare Drehmoment (CA_act) der Kupplungsvorrichtung (11) geringer ist als der Drehmomentmotor (CA_mth) der genannten ersten Motor führende (10) und die Einführung von Drehmoment (CA_mel) durch den zweiten Motor führenden (12), um den Verlust an Drehmoment von dem Schiebe resultierenden zu kompensieren .

9. Verfahren nach Anspruch 8, **dadurch gekennzeichnet, dass** die Arbitrierung Schritt (54) den Vergleich von dem Motordrehmoment (CA_mth) von dem ersten Antriebsmotor (10) und ein maximales Drehmoment (Cmax10), die durch zugestellt werden kann der Erste Motor führende (10) und, wenn das Motordrehmoment (CA_mth) gleich ist das maximale Drehmoment (Cmax10), wird der Schlupfzustand gemäß der zweiten Führung (56) gesteuert wird.

10. Kraftfahrzeug mit einem von einer Steuervorrichtung gesteuerten Antriebsstrang (1), der **dadurch gekennzeichnet ist, dass** die Steuervorrichtung das Verfahren gemäß einem der Ansprüche 1 bis 9 ausführt.

## Claims

1. Method of controlling a powertrain (1) of a motor vehicle to regulate the temperature of the actuating fluid supplying a hydraulic distributor (210) of an actuating circuit (208) of the powertrain , the powertrain comprising furthermore a coupling device (11) controlled by a transmissible
torque setpoint (CS_emb), said coupling device (11) being connected to a lubrication circuit (212) powered by the actuating fluid, said method comprising a step of determination (52) of te mperature (Tcc) of the actuating fluid and controlling a slip state (53) of the coupling device (11) so as to modify the temperature of the actuating fluid, **characterized in that** it further comprises determining a predetermined temperature threshold (Ts) of the actuating fluid and, when the temperature of the actuating fluid (Tcc) is below the temperature threshold (Ts), the control of e the sliding state (53) according to a sliding torque (CP_gl) to bring the temperature of the actuating fluid above the temperature threshold (Ts).

2. Method according to claim 1, **characterized in that** the predetermined temperature threshold (Ts) is configured at a value for which a distributor response (210) has a minimum level of dispersion.

3. Method according to claim 1 or 2, **characterized in that** the determination of the temperature (52) of the actuating fluid comprises a step of measuring the temperature by a temperature sensor (209) of the actuating circuit (208).

4. Method according to any one of claims 1 to 3, **characterized in that** the value of the sliding torque (CP_gl) is a constant predetermined value.

5. Method according to any one of claims 1 to 4, **characterized in that** e the control of the slip state (53) comprises a control step (55 ; 56) so that the transmittable torque (CA_act) of the device coupling (11) is less than the torque motor (CA_mth) of a first motor driving (10) the group powerplant, the first motor driving said (10) being connected at the input of the coupling device (11).

6. Method according to claim 5, **characterized in that** it further comprises the determination of a maximum engine torque (CPmax) being issued by at least the said first motor leading (10) and if the maximum engine torque (CPmax) is greater than the motor torque delivered by at least the said first motor driving (10), the control of the slip state (53) is allowed.

7. Method according to any one of claims 5 to 6, **characterized in that** the control of the sliding state (53) is controlled according to a first mode (55) in which the first driving motor (10) introduces the sliding torque (CP_gl) so that the transmissible torque (CA_act) of the coupling device (11) is less than the motor torque (CA_mth) of said first driving motor (10).

8. Method according to claim 7 , powertrain comport ant further a second motor driving (12) adapted to transmit an engine torque (CA_mel) to the wheels , **characterized in that** it further comprises a step of arbitration (54) control of the slip state (53) between the first mode (55) and a second mode (56), and when the control of the slip state (53) is controlled according to the second mode (56), the method further comprises the reduction of the transmissible torque of the coupling device (11) according to the sliding torque (CP_gl) of such that the transmittable torque (CA_act) of the coupling device (11) is less than the torque motor (CA_mth) of said first
motor leading (10) and the introduction of u torque (CA_mel) by the second motor leading (12) to compensate for the loss of torque resulting from the sliding.

9. Method of claim 8, **characterized in that** the arbitration step (54) comprises the comparison of the engine torque (CA_mth) of said
first driving motor (10) and a maximum torque (Cmax10) that can be delivered by the First r engine leading (10) and when the engine torque (CA_mth) is equal to the maximum torque (Cmax10), the slip state is controlled according to the second guide (56).

10. Motor vehicle comprising a powertrain (1) controlled by a control device, **characterized in that** the control device executes the method according to any one of claims 1 to 9.
